# FASCICULE DE BREVET EUROPEEN

(11) **EP 2 235 443 B1**
(45) Date de publication et mention de la délivrance du brevet: **24.10.2018**
(21) Numéro de dépôt: 09706011.5
(22) Date de dépôt: 21.01.2009
(51) Int. Cl.: F23J 15/00, B01D 53/62, F23J 15/02, B01D 53/00

(54) **PROCÉDÉ DE COMBUSTION DE COMBUSTIBLES CARBONÉS AVEC FILTRATION DES FUMÉES DE COMBUSTION AVANT COMPRESSION**
VERFAHREN ZUM VERBRENNEN VON KOHLENSTOFFHALTIGEN BRENNSTOFFEN MIT EINEM VERBRENNUNGSGASFILTER VOR EINER KOMPRESSION
METHOD FOR BURNING CARBONATED FUELS WITH COMBUSTION SMOKE FILTRATION BEFORE COMPRESSION

(30) Priorité: 28.01.2008 FR 0850501
(43) Date de publication de la demande: 06.10.2010
(73) Titulaire: L'Air Liquide Société Anonyme pour l'Etude et l'Exploitation des Procédés Georges Claude, 75007 Paris (FR)
(72) Inventeur: COURT, Philippe, F-94300 Vincennes (FR); DARDE, Arthur, F-75005 Paris (FR); TRANIER, Jean-Pierre, F-94240 L'Hay-les-Roses (FR)
(74) Mandataire: Laigneau, Amandine
(86) Numéro de dépôt international: PCT/FR2009/050078
(87) Numéro de publication internationale: WO 2009/095581

(56) Documents cités:
- WO-A-91/13290
- WO-A-99/51367
- DE-U1- 9 418 234
- US-A- 5 376 354

## Description

La présente invention concerne un procédé de combustion de combustible carboné caractérisé en ce que les fumées de combustion sont filtrées de façon à atteindre une concentration en particules solides inférieures à 1mg/m³ avant compression, purification et séquestration ou transport.

Les changements climatiques constituent l'un des plus grands défis environnementaux. L'accroissement de la concentration en dioxyde de carbone dans l'atmosphère est en très grande partie la cause du réchauffement global. Le CO₂ d'origine humaine est essentiellement émis dans l'atmosphère par la combustion des combustibles fossiles dans les centrales thermiques.

Les centrales thermiques permettent par combustion de combustibles de dégager de la chaleur utilisable pour produire de la vapeur d'eau et éventuellement de l'énergie mécanique ou électrique. Les fumées de combustion dégagent des quantités importantes de CO₂ dans l'atmosphère.

Pour lutter contre les émissions de CO₂, une technologie vise à capturer le CO₂ émis lors de la combustion de combustibles carbonés pour le transporter et/ou le séquestrer sous terre. Cependant, pour qu'une telle capture du CO₂ soit possible, une partie des fumées de combustion devra être comprimé jusqu'à une pression typiquement de l'ordre de 4 à 60 bar abs avant d'être purifiées puis à nouveau comprimée jusqu'à une pression typiquement de 100 à 200 bar abs pour être séquestrée.

La technologie de compression pour des gaz en si grand volume et sur des taux de compression tels, requièrent aujourd'hui l'utilisation de compresseurs centrifuges où des roues mobiles éjectent le gaz de manière centrifuge. Afin de réduire la consommation énergétique, ces compresseurs sont multi-étagés, un réfrigérant permettant de ramener le gaz à la température ambiante à chaque étage.

Tant les roues de compression que les échangeurs inter-étage sont sujets à l'encrassement par les particules solides issues de la combustion. Les particules peuvent boucher les échangeurs et réduire leurs capacités thermiques. En ce qui concerne les roues, celles-ci peuvent être déséquilibrées par l'accumulation non homogène de masse sur les roues. Ceci conduit à un déséquilibre de l'arbre mécanique, des vibrations et potentiellement la destruction de la machine.

Une autre technologie de compression des gaz en si grand volume est la technologie dite axiale dans laquelle des ailettes rotoriques tournant à grande vitesse alternées avec des ailettes statoriques fixes compriment le gaz dans l'axe du rotor de la machine. Pour une telle technologie, la présence de particules solides engendre une perte de matière sur les ailettes notamment par érosion.

On est donc confronté à un problème de dépoussiérage. Par « dépoussiérage » on entend toute action ou procédé dans lequel une fumée ou un gaz est débarrassé par une séparation gaz/solide d'une fraction substantielle des solides qu'il véhicule. Les appareils ou équipements effectuant cette tâche sont nommés dépoussiéreurs ou séparateurs de poussières.

Comme mentionné dans le document B. SIRET, « Dépoussiérage et dévésiculage », Techniques de l'Ingénieur, J 3 580, pages 1 à 26, les technologies traditionnellement mises en place pour résoudre le problème de dépoussiérage lorsqu'on brûle un combustible carboné sont de différents types ; et on distingue :
- les filtres électro-statiques où les particules chargées sont écartées du flux de fumées,
- les filtres à manche où l'on fait passer les fumées à travers un textile filtrant,
- les Cyclones où les particules sont séparées par centrifugation et accélération, et
- les laveurs où les fumées sont mises en contact avec une douche liquide.

Le document WO91/13290 décrit un procédé de combustion de combustibles carbonés mettant en oeuvre une purification des gaz de combustion.

Ces technologies permettent d'abaisser la teneur en poussières des valeurs classiques du gramme ou dizaines de grammes par mètre cube à la sortie de la chaudière à des niveaux mille fois inférieurs en ligne avec les normes de rejet habituelles dans l'atmosphère, mais toujours supérieure au milligramme par mètre cube.

Néanmoins, avec une teneur en poussière dans les fumées supérieure ou égale à 1 mg/m³, la compression va subir un encrassement, notamment dans les réfrigérants intermédiaires qui va nécessiter des arrêts pour maintenance fréquents. Par ailleurs, cela entraîne une dégradation de la performance de la compression.

Partant de là, un problème qui se pose est de proposer un procédé de combustion de combustibles carbonés avec un traitement amélioré des fumées de combustion, notamment un traitement adapté à la technologie des compresseurs centrifuges.

Une solution de l'invention est un procédé de combustion de combustibles carbonés selon l'objet de la revendication 1.

De préférence, les fumées de combustion sont comprimées à l'étape b) à une pression supérieure à 4 bars.

De préférence, la compression mise en oeuvre à l'étape b) est réalisée au moyen de compresseurs centrifuges.

On atteint de préférence à l'étape a), une concentration en particules solides inférieure à 500 µg/m³, encore préférentiellement inférieure à 300 µg/m³.

Selon le cas, le procédé selon l'invention peut présenter l'une des caractéristiques suivantes :
- soit les fumées de combustion n'ont pas été saturées en eau avant l'étape a), soit on met en oeuvre avant l'étape a) de filtration une étape de désaturation des fumées de combustion,
- l'étape a) est réalisée après une première compression des fumées de combustion,
- on met en oeuvre au moins un échangeur de chaleur en aval de l'étape de filtration a) et en amont de l'étape c),
- l'unité de combustion est une unité employant comme comburant de l'air dans laquelle la capture du CO₂ est réalisée par absorption du CO₂ dans les fumées ; on parle de capture dite de « post-combustion »,
- l'unité de combustion est une unité d'oxy-combustion employant comme comburant un gaz appauvri en azote par rapport à l'air,
- la filtration de l'étape a) est complétée entre l'étape a) et l'étape c) par une filtration statique,
- les fumées de combustion en sortie de la filtration statique présentent une concentration en particules solides inférieure à 10 µg/m³,
- on met en oeuvre en aval de l'étape de filtration a) pour des fumées de combustion de températures supérieures à 100°C au moins un échangeur choisi parmi les échangeurs à plaques, les échangeurs à tubes ailetés et les échangeurs en aluminium brasé,
- on met en oeuvre en aval de l'étape de filtration a) pour des fumées de combustion de températures inférieures à 100°C des échangeurs en matière plastique,
- on met en oeuvre en aval de l'étape de filtration a) des échangeurs compacts,
- on met en oeuvre en aval de l'étape de filtration a) des tours de lavage et/ou des colonnes à distiller équipées de garnissage pour éliminer au moins partiellement au moins une des impuretés choisie parmi SO₂, NO₂, N₂, O₂, Ar et N₂O₄,
- on met en oeuvre une étape de désulfuration et/ou une étape de refroidissement, pour éliminer l'eau par condensation, en amont de l'étape a) de filtration et/ou en aval de l'étape a) de filtration,
- les fumées de l'oxycombustion sont divisées en au moins deux parties, une première partie étant recyclée vers l'unité de combustion, et une deuxième partie subissant les étapes b), c) et d), et seule la deuxième partie subit une étape de désulfuration et/ou une étape de refroidissement pour éliminer l'eau par condensation,
- la totalité des fumées de combustion subit au moins une étape de désulfuration, puis une première partie des fumées de combustion désulfurée est recyclée vers la chaudière tandis qu'une deuxième partie des fumées de combustion désulfurée subit les étapes a), b), c) et d).
- le combustible carboné est du charbon et la première partie des fumées de combustion subit avant d'être renvoyée vers la chaudière une deuxième étape de désulfuration,
- la totalité des fumées de combustion subit une première étape de désulfuration avant l'étape a) de filtration, puis une deuxième étape de désulfuration après l'étape a) de filtration, avant d'être divisée en deux parties, une première partie des fumées de combustion étant recyclée vers la chaudière, et une deuxième partie des fumées de combustion subissant les étapes b), c) et d).

Notons que dans le cadre d'une oxycombustion, la partie des fumées recyclée peut représenter jusqu'à 80% des fumées de combustion.

Par « postcombustion », on entend un procédé de combustion classique à l'air suivi d'une séparation du CO₂ des fumées de combustion, par exemple par absorption par des amines ou par de l'ammoniac.

Les étapes de désulfuration peuvent être par exemple réalisées par lavage au moyen d'une solution qui contient du calcaire ou de la soude.

L'étape a) de filtration, appelée « filtration fine », est réalisée à l'aide d'un filtre à cartouches. Elle est effectuée à une température comprise entre 0°C et 300°C, préférentiellement entre 100°C et 200°C. Par filtre à cartouches, on entend des cartouches filtrantes constituées de média fibreux plissé mis en oeuvre sous forme cylindrique. Cette technologie de filtre permet de proposer de grandes surfaces de filtration pour un faible volume d'encombrement et des pertes de charge générées plus faibles pour un même débit de gaz à traiter. En effet, l'opération de plissage permet d'augmenter la surface de filtre mis en oeuvre dans une canalisation de section donnée, et permet ainsi de diminuer la vitesse frontale du gaz au niveau du filtre, réduisant de ce fait les pertes de charge.

Selon l'invention, le filtre à cartouches est décolmaté après filtration à l'aide d'un fluide riche en CO₂ ou encore à l'air. Ce fluide riche en CO₂ est issu de l'étape b) et/ou d).

Par « échangeur compact » on entend un échangeur dont la compacité est supérieure à 700m²/m³; la compacité étant définie par le rapport de l'aire de la surface d'échange au volume de l'échangeur.

Les échangeurs à tube ailetés sont constitués de tubes permettant d'améliorer le coefficient d'échange thermique. Il existe différents types d'échangeurs à tubes ailetés. Dans le cadre de la présente invention, on peut, par exemple, mettre en oeuvre une batterie à ailettes constituée d'un faisceau de tubes, répartis en rangs ou nappes, dans lesquels circule un fluide caloporteur ayant un bon coefficient d'échange.

Par « échangeur à plaque », on entend un échangeur à surface primaire ou à surface secondaire. Les échangeurs à surface primaire sont constitués de plaques corruguées, nervurées ou picotées. Le dessin du profil de plaques peut être assez varié mais il a toujours un double rôle d'intensification du transfert de chaleur et de tenue à la pression par multiplications des points de contact. Parmi les échangeurs à surface primaire, on note les échangeurs avec plaques soudées ou brasées qui permettent d'utiliser ces surfaces d'échanges primaires à des températures supérieures à 150°C. Dans le cadre de la présente invention, ces échangeurs peuvent être utilisés, sans souci d'encrassement, en raison de la mise en oeuvre préalable de l'étape a) de filtration. Les échangeurs à surface secondaire utilisent des ailettes plissées ou ondulées.

Le document A. BONTEMPS et al., « Echangeurs de chaleur », Techniques de l'Ingénieur, B 2 3241 pages 3-4 et 7 à 13 décrit les différents types d'échangeurs à tubes ailetés et d'échangeurs à plaques.

Selon une variante ne faisant pas partie de l'invention, une autre technologie, pouvant être mise en oeuvre à l'étape a) de filtration, est basée sur la filtration par des média en plastique comme, par exemple, le PPS (Polysulfure de phenylene), polyester, PTFE (polytétrafluoroéthylène). Ces plastiques permettent à la fois d'atteindre les niveaux de filtration submicronique et de résister selon les cas aux températures comprises entre 50°C et 200°C.

Par « filtre statique », on entend un filtre grossier et/ou fin, de préférence fin ou une combinaison grossier puis fin. Par filtre fin, on entend un filtre qui est de classe F5 à F9 au sens de la norme européenne EN 779:2002 ; il s'agit par exemple d'un filtre statique à poches ou à cassettes, typiquement de dimensions 24 pouces par 24 pouces (610 mm par 610 mm environ). Par filtre grossier on entend un filtre de classe G1 à G4.

Le filtre statique selon la variante ne faisant pas partie de l'invention, peut être suivi d'un filtre HEPA ou ULPA. Le filtre HEPA est un filtre de classe H10 à H14 et le filtre ULPA est un filtre de classe U15 à U17 au sens des normes européennes EN 1822-1 : 1998, 1822-2 :1998 et 1822-3 : 1998.

Le procédé selon l'invention met en oeuvre une unité de combustion alimentée par un combustible carboné. De préférence, ce combustible est du charbon mais cela peut être n'importe quel combustible à base d'atomes de carbone : résidus pétroliers, hydrocarbures, gaz naturel, biomasse, ordures ménagères...

La combustion est de préférence une oxycombustion, c'est-à-dire une combustion dont le comburant est un gaz appauvri en azote par rapport à de l'air et enrichi en CO₂. Cet appauvrissement en azote est obtenu en séparant de l'air en une fraction enrichie en oxygène et une fraction enrichie en azote par exemple dans une unité de séparation des gaz de l'air par voie cryogénique. La fraction enrichie en oxygène est mélangée avec une partie des fumées de combustion riche en CO2 recyclée pour former le comburant. Elle présente en général une concentration en oxygène supérieure à l'air. On notera que l'oxycombustion peut également être réalisée à l'oxygène pur, c'est-à-dire non dilué avec une partie des fumées de combustion riche en CO2. Sa teneur est alors typiquement comprise entre 85% et 99.9%.

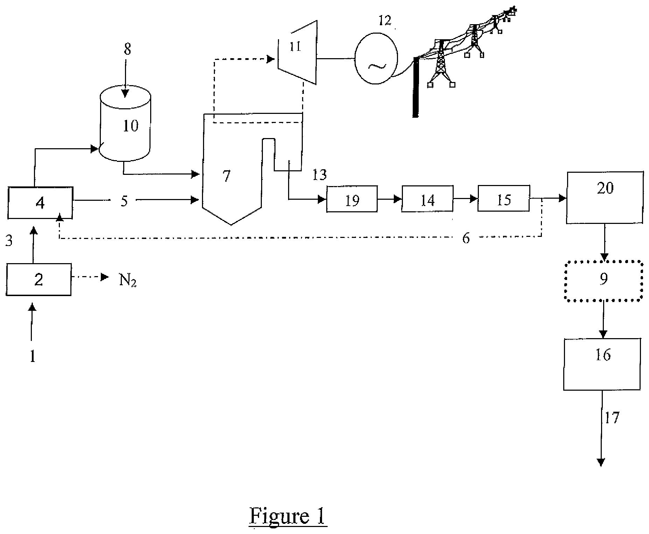

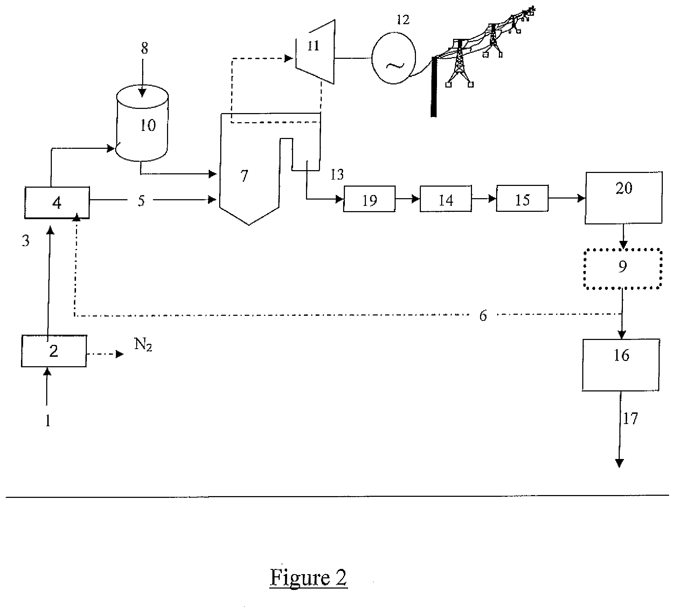

A présent, l'invention va être décrite plus en détail à l'aide des figures 1 et 2.

La figure 1 illustre un procédé général, selon l'invention, mettant en oeuvre une chaudière à charbon pulvérisé et fonctionnant avec un comburant plus pauvre en azote que l'air, caractérisé en ce que la totalité des fumées de combustion subit une étape de désulfuration.

L'utilisation du fluide riche en CO2 issu de l'étape b/ et/ou c/ pour décolmater le filtre à cartouches n'est pas représenté sur la figure 1.

De l'air 1 est introduit dans l'unité 2 de séparation des gaz de l'air qui produit alors de l'oxygène 3. L'oxygène 3 est envoyé dans un mélangeur 4 où il peut être mélangé via un canal de recirculation de CO₂ à un gaz de recycle 6 riche en CO₂. Le comburant 5 issu du mélangeur 4 est ensuite introduit dans la chaudière 7 à charbon pulvérisé fonctionnant alors à un comburant plus pauvre en azote que l'air.

Le combustible 8, ici le charbon brut, est tout d'abord envoyé dans un pulvériseur 10 avant d'être introduit dans la chaudière 7 à charbon pulvérisé.

La vapeur issue de la chaudière est détendue dans une turbine à vapeur 11, qui fournit un travail mécanique. Ce travail est transformé en énergie à l'aide d'un alternateur 12.

Les fumées de combustion 13 peuvent faire l'objet de traitement divers : élimination du mercure (non représenté) et des oxydes d'azote 19, dépoussiérage 14 et désulfuration et/ou refroidissement 15.

Une première partie 6 de ces fumées d'oxycombustion peut-être recyclée vers la chaudière de manière à diminuer la teneur en oxygène au niveau de la combustion et donc la température de combustion.

Les fumées de combustion non recyclées (deuxième partie des fumées de combustion) sont quant à elles filtrées au moyen d'un filtre à cartouches 20 avant d'être envoyées dans l'unité 16 de compression et de purification (CPU) du CO₂. Préalablement à l'étape 16 de compression, les fumées peuvent subir un lavage 9 visant à éliminer SOx et/ou NOx et/ou à les refroidir par contact direct pour en éliminer une partie de l'eau par condensation.

Le CO₂ purifié 17 issu de l'unité 16 CPU peut ensuite être conditionné et/ou transporté et/ou stocké.

Par dépoussiérage 14, on entend un dépoussiérage par les techniques traditionnelles ; par exemple un dépoussiérage au moyen de filtres électrostatiques ou de filtres à manche.

La figure 2 illustre un procédé, selon l'invention, mettant en oeuvre une chaudière à charbon pulvérisé et fonctionnant avec un comburant plus pauvre en azote que l'air, caractérisé en ce que la totalité des fumées de combustion subit une première étape de désulfuration avant l'étape a) de filtration puis une deuxième étape de désulfuration avant d'être divisée en deux parties, une première partie des fumées de combustion étant recyclée vers la chaudière, et une deuxième partie des fumées de combustion subissant les étapes b), c) et d). L'utilisation d'un fluide riche en CO2 issu de l'étape b/ et/ou d/ pour décolmater le filtre à cartouches n'est pas représenté sur la figure 2.

Ce procédé se distingue du précédant en ce que :
- la totalité des fumées de combustion est filtrée au moyen d'un filtre à cartouches 20 avant d'être envoyée dans le laveur 9 visant à éliminer SOx et/ou NOx et/ou refroidie par contact direct pour en éliminer une partie de l'eau par condensation,
- une première partie 6 des fumées de combustion peut être recyclée après le laveur 9 vers la chaudière, et
- les fumées de combustion non recyclées (deuxième partie des fumées de combustion) sont quant à elles envoyées dans l'unité 16 de compression et de purification (CPU) du CO₂.

A noter que des solutions intermédiaires entre celle décrite pour la Figure 1 et celle décrite pour la Figure 2 sont envisageables. Par exemple la fraction du comburant allant aux pulvérisateurs peut nécessiter une élimination de l'eau de manière à vaporiser l'eau contenue dans le charbon alors que l'autre partie du comburant 5 ne le nécessite pas. Elle sera alors recyclée comme sur la Figure 1.

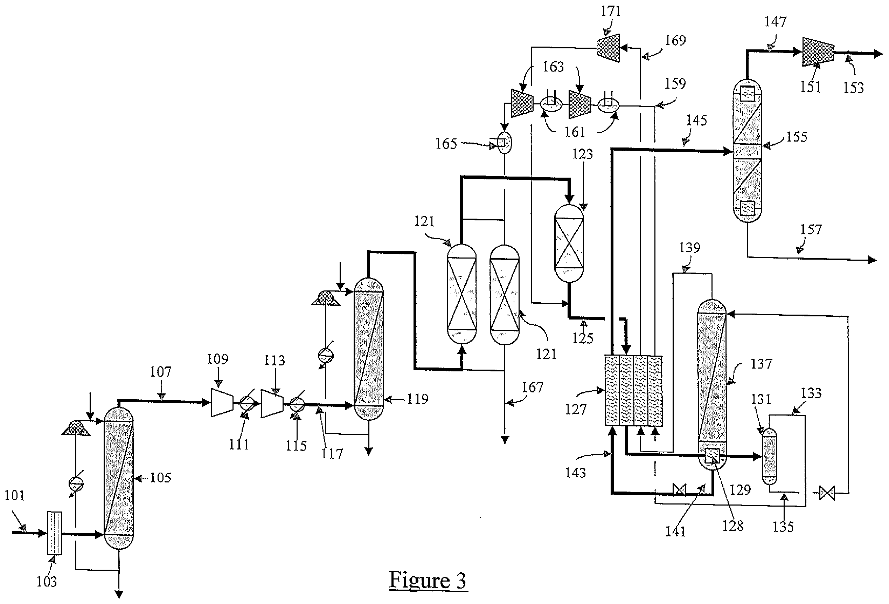

La figure 3 offre une description plus détaillée des étapes a), b), c) et d) du procédé selon l'invention. L'utilisation d'un fluide riche en CO2 issu de l'étape b/ et/ou c/ pour décolmater le filtre à cartouches n'est pas représenté sur la figure 3.

Pour simplifier la description, on appellera « filtration fine » la filtration des fumées de combustion de façon à atteindre une concentration en particules solides inférieures à 1mg/m³.

Les fumées de l'oxycombustion 101 subissent une filtration fine 103 et un lavage/refroidissement dans une tour à contact direct 105. Dans cette tour, on pourra éliminer SOx et/ou NOx. La tour de lavage basse pression peut être à garnissages grâce à la filtration fine. En effet, une filtration classique conduirait à un encrassement des garnissages. Il faudrait alors nettoyer la tour plus souvent ou avoir recours à des plateaux, moins sujets à l'encrassement mais générant plus de pertes de charge. Les fumées refroidies 107 entrent dans un premier étage de compression 109 avant d'être refroidies dans un échangeur 111 puis dans un deuxième étage de compression 113 avant d'être à nouveau refroidies dans un échangeur 115. Ces échangeurs 111 et 115 peuvent être ailetés ou à plaque ou compact grâce à la filtration fine. La pression du fluide 117 est typiquement comprise entre 4 et 60 bar abs, de préférence entre 15 et 35 bar abs. Le nombre d'étage de compression est adapté en fonction de la pression. Chaque étage de compression peut être constitué d'une ou plusieurs roue(s) centrifuge(s). Le fluide 117 entre ensuite dans une tour de lavage/refroidissement 119 haute pression puis est séché dans un adsorbeur 121 et subit une étape de démercurisation par adsorption dans un adsorbeur 123. La tour de lavage haute pression peut être à garnissages grâce à la filtration fine. Le fluide 125 obtenu subit ensuite une condensation partielle dans les échangeurs 127 et 128. Ces échangeurs peuvent être en aluminium brasé grâce à la filtration fine. Dans certains cas, cette filtration fine suffisante pour éviter l'encrassement des compresseurs peut être insuffisante pour l'utilisation de tels échangeurs. Par ailleurs, les étapes de séchage et de démercurisation par adsorption peuvent introduire des particules solides dans le fluide. Une filtration complémentaire par exemple par cartouche en métal fritté peut être réalisée sur le fluide 125. Le fluide partiellement condensé est séparé en une fraction liquide enrichie en CO₂ et une fraction vapeur typiquement enrichie en N₂, Ar, O₂. La fraction liquide est détendue et enrichie en CO₂ dans une colonne à distiller 137. Un fluide gazeux 139 est prélevé de la colonne, réchauffé dans l'échangeur 127 puis éventuellement comprimé dans un compresseur 171 et recyclé en amont de l'échangeur 127 de manière à améliorer le rendement CO₂. Un fluide liquide 141 est éventuellement détendu et vaporisé dans l'échangeur 127 puis introduit dans une colonne à distiller 155 pour le purifier en composés lourds comme SO₂ et NO₂/N₂O₄ qui n'auraient pas été éliminés par les étapes de purification précédentes. Les colonnes à distiller peuvent être à garnissages grâce à l'utilisation de la filtration fine. Une fraction liquide 157 enrichie en composés lourds est extraite de cette colonne et une fraction enrichie en CO₂ est produite et comprimée dans un compresseur 151 prête à la séquestration à une pression typiquement comprise entre 100 et 200 bar abs. La fraction gazeuse 133 est réchauffée dans l'échangeur 127 et détendue en une ou plusieurs étapes dans des turbines 163 ayant été préalablement préchauffée dans des échangeurs 161 de manière à récupérer l'énergie sous forme de pression. Ce fluide entre ensuite dans le réchauffeur 165 et sert à régénérer l'adsorbeur 121.

A titre d'exemple, le procédé de combustion selon l'invention peut mettre en oeuvre une unité d'oxycombustion produisant des fumées d'oxycombustion comprenant environ 55% de CO₂, 20% d'H₂O, 20% de N₂, 5 % d'O₂ et d'argon et des traces d'autres impuretés, et être caractérisé par la récupération à l'étape d) d'un flux gazeux comprenant au moins 90 % de CO₂, de préférence au moins 95% de CO₂.

Le procédé selon l'invention présente notamment les avantages suivants :
- utilisation d'échangeurs de chaleur plus performants que les tubes lisses, qui sont les seuls échangeurs utilisables avec une teneur en poussière supérieure à 1 mg/m³,
- meilleure compression,
- diminution du nombre d'arrêt pour maintenance dans un temps donné,
- l'utilisation de tours de lavage et/ou de colonnes à distiller équipées de garnissages au lieu de plateaux, générant ainsi moins de pertes de charge et par la même améliorant l'efficacité énergétique du système, et
- l'amélioration la pureté du produit final en particules solides, ce qui réduit l'encrassement des équipements en aval, et notamment le pipeline.

## Revendications

1. Procédé de combustion de combustibles carbonés mettant en oeuvre une unité de combustion produisant des fumées de combustion comprenant en outre du dioxyde de carbone (CO₂), des particules solides et au moins une des impuretés choisies parmi l'eau, l'azote, l'oxygène, l'argon, les oxydes d'azote (NOx) dont le monoxyde d'azote et le dioxyde d'azote et les oxydes de soufre (SOx) dont le dioxyde de soufre, **caractérisé en ce qu'**on met en oeuvre les étapes suivantes :
a) la filtration des fumées de combustion à l'aide d'un filtre à cartouches de façon à atteindre une concentration en particules solides inférieure à 100 µg/m³,
b) la compression des fumées de combustion filtrées à l'étape a),
c) la purification des fumées de combustion comprimées à l'étape b) de façon à éliminer au moins partiellement une des impuretés, et
d) la récupération d'un flux gazeux enrichi en CO₂ ;
avec le filtre à cartouches étant décolmaté après filtration à l'aide d'un fluide riche en CO₂ issu de l'étape b) et/ou d).

2. Procédé selon la revendication 1, **caractérisé en ce que** soit les fumées de combustion n'ont pas été saturées en eau avant l'étape a), soit on met en oeuvre avant l'étape a) de filtration une étape de désaturation des fumées de combustion.

3. Procédé selon l'une des revendications 1 ou 2, **caractérisé en ce que** l'étape a) est réalisée après une première compression des fumées de combustion.

4. Procédé selon l'une des revendications 1 à 3, **caractérisé en ce qu'**on met en oeuvre au moins un échangeur de chaleur en aval de l'étape de filtration a) et en amont de l'étape c).

5. Procédé selon l'une des revendications 1 à 4, **caractérisé en ce que** l'unité de combustion est une unité employant comme comburant de l'air dans laquelle la capture du CO₂ est réalisée par absorption du CO₂ dans les fumées.

6. Procédé selon l'une des revendications 1 à 5, **caractérisé en ce que** l'unité de combustion est une unité d'oxy-combustion employant comme comburant un gaz appauvri en azote par rapport à l'air.

7. Procédé selon l'une des revendications 1 à 6, **caractérisé en ce que** la filtration de l'étape a) est complétée entre l'étape a) et l'étape c) par une filtration statique.

8. Procédé selon l'une des revendications 1 à 7, **caractérisé en ce que** les fumées de combustion en sortie de la filtration statique présentent une concentration en particules solides inférieure à 10 µg/m³.

9. Procédé selon l'une des revendications 1 à 8, **caractérisé en ce qu'**on met en oeuvre en aval de l'étape de filtration a) pour des fumées de combustion de températures supérieures à 100°C au moins un échangeur choisi parmi les échangeurs à plaques, les échangeurs à tubes ailetés et les échangeurs en aluminium brasé.

10. Procédé selon l'une des revendications 1 à 9, **caractérisé en ce qu'**on met en oeuvre en aval de l'étape de filtration a) pour des fumées de combustion de températures inférieures à 100°C des échangeurs en matière plastique.

11. Procédé selon l'une des revendications 1 à 10, **caractérisé en ce qu'**on met en oeuvre en aval de l'étape de filtration a) des échangeurs compacts.

12. Procédé selon l'une des revendications 1 à 11, **caractérisé en ce qu'**on met en oeuvre en aval de l'étape de filtration a) des tours de lavage et/ou des colonnes à distiller équipées de garnissage pour éliminer au moins partiellement au moins une des impuretés choisie parmi SO₂, NO₂, N₂, O₂, Ar et N₂O₄.

13. Procédé selon l'une des revendications 6 à 12, **caractérisé en ce qu'**on met en oeuvre une étape de désulfuration et/ou une étape de refroidissement, pour éliminer l'eau par condensation, en amont de l'étape a) de filtration et/ou en aval de l'étape a) de filtration.

## Patentansprüche

1. Verfahren zur Verbrennung von kohlenstoffhaltigen Brennstoffen unter Verwendung einer Verbrennungseinheit, die Verbrennungsdämpfe erzeugt, die weiter Kohlendioxid (CO₂), Feststoffpartikel und mindestens eine von Verunreinigungen, ausgewählt aus Wasser, Stickstoff, Sauerstoff, Argon, Stickoxiden (NOx) einschließlich Stickstoffmonoxid und Stickstoffdioxid und Schwefeloxiden (SOx) einschließlich Schwefeldioxid, umfasst, **dadurch gekennzeichnet, dass** die folgenden Schritte durchgeführt werden:
a) Filtration von Verbrennungsdämpfen mit einem Kassettenfilter, um eine Feststoffpartikelkonzentration von weniger als 100 µg/m³ zu erreichen,
b) Kompression der in Schritt a) gefilterten Verbrennungsdämpfe,
c) Reinigung der in Schritt b) komprimierten Verbrennungsdämpfe, um eine der Verunreinigungen zumindest teilweise zu entfernen, und
d) Rückgewinnung eines CO₂-angereicherten Gasstroms;
wobei der Kassettenfilter nach der Filtration mit einer CO₂₋reichen Flüssigkeit aus Schritt b) und/oder d) rückgespült wird.

2. Verfahren nach Anspruch 1, **dadurch gekennzeichnet, dass** entweder die Verbrennungsdämpfe vor Schritt a) nicht mit Wasser gesättigt wurden oder vor dem Schritt a) der Filtration ein Entsättigungsschritt der Verbrennungsdämpfe durchgeführt wird.

3. Verfahren nach einem der Ansprüche 1 oder 2, **dadurch gekennzeichnet, dass** Schritt a) nach einer ersten Kompression der Verbrennungsdämpfe durchgeführt wird.

4. Verfahren nach einem der Ansprüche 1 bis 3, **dadurch gekennzeichnet, dass** mindestens ein Wärmetauscher nach dem Filtrationsschritt a) und vor Schritt c) eingesetzt wird.

5. Verfahren nach einem der Ansprüche 1 bis 4, **dadurch gekennzeichnet, dass** die Verbrennungseinheit eine Einheit ist, die als Verbrennungsmittel Luft verwendet, bei der die Abscheidung von CO₂ durch Absorption von CO₂ in den Abgasen durchgeführt wird.

6. Verfahren nach einem der Ansprüche 1 bis 5, **dadurch gekennzeichnet, dass** die Verbrennungseinheit eine Sauerstoffverbrennungseinheit ist, die als Verbrennungsmittel ein relativ zur Luft stickstoffarmes Gas verwendet.

7. Verfahren nach einem der Ansprüche 1 bis 6, **dadurch gekennzeichnet, dass** die Filtration von Schritt a) zwischen Schritt a) und Schritt c) durch statische Filtration abgeschlossen wird.

8. Verfahren nach einem der Ansprüche 1 bis 7, **dadurch gekennzeichnet, dass** die aus der statischen Filtration austretenden Verbrennungsdämpfe eine Feststoffpartikelkonzentration von weniger als 10 µg/m³ aufweisen.

9. Verfahren nach einem der Ansprüche 1 bis 8, **dadurch gekennzeichnet, dass** nach dem Filtrationsschritt a) für Verbrennungsdämpfe bei Temperaturen über 100°C mindestens ein Wärmetauscher, ausgewählt aus Plattentauschern, Rippenrohrtauschern und gelöteten Aluminiumtauschern, eingesetzt wird.

10. Verfahren nach einem der Ansprüche 1 bis 9, **dadurch gekennzeichnet, dass** nach dem Filtrationsschritt a) für Verbrennungsdämpfe bei Temperaturen unter 100°C Kunststoffaustauscher eingesetzt werden.

11. Verfahren nach einem der Ansprüche 1 bis 10, **dadurch gekennzeichnet, dass** nach dem Filtrationsschritt a) kompakte Wärmetauscher eingesetzt werden.

12. Verfahren nach einem der Ansprüche 1 bis 11, **dadurch gekennzeichnet, dass** nach dem Filtrationsschritt a) Waschtürme und/oder mit einer Füllung ausgestattete Destillationskolonnen eingesetzt werden, um zumindest teilweise mindestens eine der Verunreinigungen ausgewählt aus SO₂, NO₂, N₂, O₂, Ar und N₂O₄ zu entfernen.

13. Verfahren nach einem der Ansprüche 6 bis 12, **dadurch gekennzeichnet, dass** vor dem Filtrationsschritt a) und/oder nach dem Filtrationsschritt a) ein Entschwefelungsschritt und/oder ein Kühlungsschritt zur Entfernung von Wasser durch Kondensation durchgeführt wird.

## Claims

1. Process for the combustion of carbonaceous fuels implementing a combustion unit generating combustion fumes further comprising carbon dioxide (CO₂), solid particles and at least one of the impurities chosen among water, nitrogen, oxygen, argon, nitrogen oxides (NOx), including nitrogen monoxide and nitrogen dioxide, as well as sulphur oxides (SOx), including sulphur dioxide, **characterised in that** the following steps are implemented:
a) Filtration of the combustion fumes using a cartridge filter to reach a concentration in solid particles of less than 100 µg/m³,
b) Compression of the combustion fumes filtered in step a),
c) Purification of the combustion fumes compressed in step b) for the purpose of removing, at least partially, one of the impurities, and
d) Recovery of a CO₂-enriched gas stream;
the cartridge filter being cleaned after filtration with a CO₂-enriched fluid generated in step b) and/or d).

2. Process according to claim 1, **characterised in that** either the combustion fumes were not water-saturated prior to step a), or a step is implemented prior to filtration step a) whereby the combustion fumes undergo a step of desaturation.

3. Process according to any one of the claims 1 or 2, **characterised in that** step a) is conducted following an initial compression of the combustion fumes.

4. Process according to any one of the claims 1 to 3, **characterised in that** at least one heat exchanger is implemented downstream from the filtration step a) and upstream from step c).

5. Process according to any one of the claims 1 to 4, **characterised in that** the combustion unit is a unit that uses, as combustion agent, air in which the CO₂ capture occurs by CO₂ absorption in the fumes.

6. Process according to any one of the claims 1 to 5, **characterised in that** the combustion unit is an oxy-combustion unit that uses, as combustion agent, a nitrogen-poor gas with respect to the ambient air.

7. Process according to anyone of the claims 1 to 6, **characterised in that** the filtration step a) is complemented by static filtration conducted between steps a) and c).

8. Process according to any one of the claims 1 to 7, **characterised in that** the combustion fumes after static filtration feature a concentration in solid particles of less than 10 µg/m³.

9. Process according to any one of the claims 1 to 8, **characterised in** the implementation, downstream from the filtration step a), for combustion fumes with a temperature of more than 100°C, of at least one heat exchanger chosen among plate heat exchangers, finned-tube heat exchangers and brazed aluminium heat exchangers.

10. Process according to any one of the claims 1 to 9, **characterised in** the implementation, downstream from the filtration step a), for combustion fumes with a temperature of less than 100 °C, of heat exchangers made of plastic material.

11. Process according to any one of the claims 1 to 10, **characterised in** the implementation, downstream from the filtration steps a), of compact heat exchangers.

12. Process according to any one of the claims 1 to 11, **characterised in** the implementation, downstream from the filtration step a), of spray towers or distillation columns fitted with a packed bed to remove, at least partially, at least one of the impurities chosen among SO₂, NO₂, N₂, O₂, Ar, and N₂O₄.

13. Process according to any one of the claims 6 to 12, **characterised in** the implementation of a desulphurisation step and/or cooling step, for the purpose of eliminating water by condensation, upstream from filtration step a) and/or downstream from filtration step a).
